# EUROPEAN PATENT SPECIFICATION

(11) **EP 2 719 800 B1**
(45) Date of publication and mention of the grant of the patent: **21.03.2018**
(21) Application number: 12797576.1
(22) Date of filing: 15.05.2012
(51) Int. Cl.: C25F 3/00, B22D 11/00, B23H 5/08, C25F 3/24, C25F 7/00, B24B 1/00

(54) **METHOD FOR PRODUCING STEEL**
VERFAHREN ZUR STAHLHERSTELLUNG
PROCÉDÉ DE PRODUCTION D'ACIER

(30) Priority: 09.06.2011 JP 2011129149
(43) Date of publication of application: 16.04.2014
(73) Proprietor: Tokyo Stainless Grinding Co., Ltd., Tokyo 131-0045 (JP)
(72) Inventor: KASAI Toshio, Yachiyo-shi Chiba 276-0046 (JP); ARAKAWA Motohiko, Yachiyo-shi Chiba 276-0046 (JP); KUSAKABE Shigeru, Tokyo 131-0045 (JP)
(74) Representative: Vossius & Partner Patentanwälte Rechtsanwälte mbB
(86) International application number: PCT/JP2012/062348
(87) International publication number: WO 2012/169320

(56) References cited:
- EP-A1- 0 754 504
- EP-A1- 1 637 265
- JP-A- H1 112 755
- JP-A- 2007 138 283
- JP-A- 2007 138 283
- US-B1- 6 273 790
- US-B1- 6 478 899

## Description

### TECHNICAL FIELD

The present invention relates to a method for producing a steel product. More specifically, the present invention relates to a method for producing a steel product in which a slab is subjected to the hot rolling treatment.

### BACKGROUND ART

Recently, in addition to the blooming method, in which a steel ingot is subjected to blooming to form a piece of steel such as a slab and the formed piece of steel is subjected to rolling to produce a steel product, the continuous casting method, in which molten steel is poured into a mold, a piece of steel solidified is continuously pulled out from the mold to form a piece of steel such as a slab, and this piece of steel is subjected to rolling to produce a steel product, has been becoming widely used. At the time of forming a piece of steel such as a slab, a billet, a bloom and a beam blank using this continuous casting method, mold powder (hereinafter referred to as powder) is put into a mold for casting in order to improve lubricity between the mold and the surface of molten steel.

The piece of steel produced by the blooming method or the continuous casting method is then subjected to the step of rolling such as hot rolling and cold rolling, and further subjected to the annealing treatment, the pickling treatment, etc. suitably to produce a steel product. As the steel product, for example, in the case of the production of a stainless steel plate utilizing the continuous casting method, pouring molten steel, continuous casting of a slab, the treatment of the slab surface, heating of the slab, hot rolling, annealing, shot blasting, pickling, coil grinding, cold rolling, and annealing/pickling or bright annealing are carried out to produce the stainless steel plate (Japanese Laid-Open Patent Publication No. H07-286215 (Patent Document 1)).

In the process of producing a steel product as described above, the surface of the piece of steel made by continuous casting is covered with an oxidized coating. At the time of producing a piece of steel, since a mold is vibrated in order to prevent the burned piece of steel from being stuck to the mold, a cyclic concavo-convex pattern called "oscillation mark" is sometimes formed on the surface of the piece of steel. In addition, for example, due to entrapping of mold powder put into the mold at the time of continuous casting, a layer entrapping mold powder is sometimes formed on the surface of the piece of steel, and due to this, depending on circumstances, surface detects such as scratch, indentation and craze (about several hundred µm) may be formed on the surface of a rolled plate made by rolling the piece of steel.

Thus, the surface quality of a piece of steel significantly affects the process yield in the rolling process and the quality, and therefore, it is important to improve the quality of the piece of steel as much as possible. Currently, for this purpose, the surface of a piece of steel such as a slab is, for example, ground by a grindstone or treated with a scarfer to remove a surface scale, an oscillation mark, a layer entrapping mold powder, etc. from the piece of steel.

In addition, a device for reducing the surface of a stainless steel product has been developed (International Publication WO2005/000512 pamphlet (Patent Document 2)), and a technique of reducing the surface of a rolled plate using such a device has been examined (Japanese Laid-Open Patent Publication No. 2007-138283 (Patent Document 3)).

JP 2007 138283 (A) may be regarded the closest state of the art and discloses a method for producing a stainless steel sheet that comprises a process where a hot rolled sheet is subjected to shot blast treatment or scale braking treatment, is thereafter subjected to electrolytic abrasive grain area reduction treatment, and is further cold-rolled.

### PRIOR ART DOCUMENTS

### PATENT DOCUMENTS

Patent Document 1: Japanese Laid-Open Patent Publication No. H07-286215
Patent Document 2: International Publication WO2005/000512 pamphlet
Patent Document 3: Japanese Laid-Open Patent Publication No. 2007-138283

### SUMMARY OF THE INVENTION

### PROBLEMS TO BE SOLVED BY THE INVENTION

However, the grinding process in which even deep pit-like defects are removed is accompanied by increase in the load of the grindstone and the cost, and reduces a yield with respect to the slab treatment. When a steel product having a sufficient surface quality is provided, the cost may be increased, and when the cost is decreased, a slab may not have a sufficient surface quality.

Further, the slab treatment using a scarfer such as a hot scarfer and a cold scarfer has a higher ability to remove the surface layer portion compared to the treatment using a grinder, but since the slab surface is treated with a flammable gas allowed to spew out from a nozzle of the scarfer, a surge with a size of about several mm may be generated on the slab.

Under the above-described circumstances, it has been desired to reduce surface defects of slabs before the hot rolling step.

### MEANS FOR SOLVING THE PROBLEMS

The method for producing a steel product of the present invention is as follows:
[1] A method for producing a steel product, said method comprising the following steps in consecutive order: producing a slab, wherein a molten metal is cast to produce the slab, electrolytic grinding reducing treatment, wherein the slab is subjected to a surface-reducing treatment using a surface-reducing device having an electrode, in which a voltage is applied to the electrode, and one or more selected from the group consisting of an elastic grindstone and a flexible abrasive grain unit, hot rolling treatment of the slab, optionally plate annealing, and shot blasting or scale breaking.
[2] The method for producing the steel product according to item [1], wherein the surface-reducing device is a rotation surface-reducing head for electrolytic grinding reducing having a head base, a rotary shaft, and one or more selected from the group consisting of an electrode, an elastic grindstone and a flexible abrasive grain unit disposed on a bottom surface of the head base, and wherein the surface-reducing treatment is carried out with an electrolyte being flowed between the electrode and the steel product.
[3] The method for producing the steel product according to item [2], wherein in the rotation surface-reducing head for electrolytic grinding reducing, the elastic grindstone or the flexible abrasive grain unit is disposed to project from the electrode.
[4] The method for producing the steel product according to any one of items [1] to [3], wherein in the step of producing the slab, the slab is continuously taken out of a mold.
[5] The method for producing the steel product according to any one of items [1] to [4], wherein the slab is a slab subjected to scale crushing.
[6] The method for producing the steel product according to item [5], wherein the scale crushing is performed by shot blasting.
[7] The method for producing the steel product according to any one of items [1] to [6], wherein the current density of a current flowed between the electrode and the slab is 5 to 40 A/cm².
[8] The method for producing the steel product according to any one of items [1] to [7], wherein the flow rate of the electrolyte flowed between the electrode and the slab is 5 to 10 m/sec.
[9] The method for producing the steel product according to any one of items [1] to [8], wherein the steel product is stainless steel.

### ADVANTAGEOUS EFFECT OF THE INVENTION

When using the preferred embodiment of the present invention, for example, it is possible to improve a yield of the slab treatment and productivity and to modify the surface after the treatment. As a result, it is possible to significantly improve the quality of a steel product after going through the following hot rolling step and cold rolling step.

When using the preferred embodiment of the present invention, a layer entrapping powder, concave portions and convex portions on the slab surface are reduced. As a result, a load of a coil grinder before cold rolling carried out after hot rolling is reduced, the quality of the surface of a steel product after cold rolling is improved, and a yield of the production of the steel product is improved.

In addition, when using the preferred embodiment of the present invention, the quality of the steel product and a yield of the process for producing the steel product can be improved.

### BRIEF DESCRIPTION OF THE DRAWINGS

FIG. 1 is a perspective view of a surface-reducing head in which an elastic grindstone and an electrode formed into a pad-like shape fit to the size of the elastic grindstone are disposed on a head base.
FIG. 2 is an explanatory drawing of a surface-reducing head in which an electrode and an elastic grindstone are alternately disposed around a rotary shaft of a head base.
FIG. 3 is a partial cross-sectional view of a surface-reducing head and a product to be processed cut along a rotary shaft.
FIG. 4 is a perspective view of a surface-reducing head in which an elastic grindstone, a flexible abrasive grain unit and an electrode having a pad-like shape are disposed on a head base.
FIG. 5 is an explanatory drawing of a surface-reducing head in which an electrode, an elastic grindstone and a flexible abrasive grain unit are sequentially disposed around a rotary shaft of a head base.
FIG. 6 is a partial cross-sectional view of a surface-reducing head, which has an elastic grindstone, an electrode and a flexible abrasive grain unit, and a product to be processed cut along a rotary shaft.
FIG. 7 is an external view showing a whole surface-reducing device.
FIG. 8 is an explanatory drawing of a surface-reducing head cut along a rotary shaft, showing a flow of an electrolyte.
FIG. 9 is an explanatory drawing of a surface-reducing head cut along a rotary shaft, explaining an appearance of an elastic grindstone in contact with the surface of a product to be processed.
FIG. 10 is a flowchart showing procedures of the method for producing a steel product of the present invention.

### BEST MODE FOR CARRYING OUT THE INVENTION

Hereinafter, the method for producing the steel product of the present invention will be specifically described by using the drawings. However, the present invention is not limited to the description in the best mode for carrying out the invention.

### 1. Surface-reducing device of the present invention

The surface-reducing device to be used in the method for producing the steel product of the present invention is a device which performs the surface-reducing treatment for the surface of a slab by means of polishing or the like. Specifically, the surface-reducing device has one or more selected from the group consisting of an elastic grindstone and a flexible abrasive grain unit and an electrode. At the time of friction between the surface of the slab and the elastic grindstone or the flexible abrasive grain unit provided to the surface-reducing device, a voltage is applied to the electrode, thereby performing the electrolytic grinding reducing treatment.

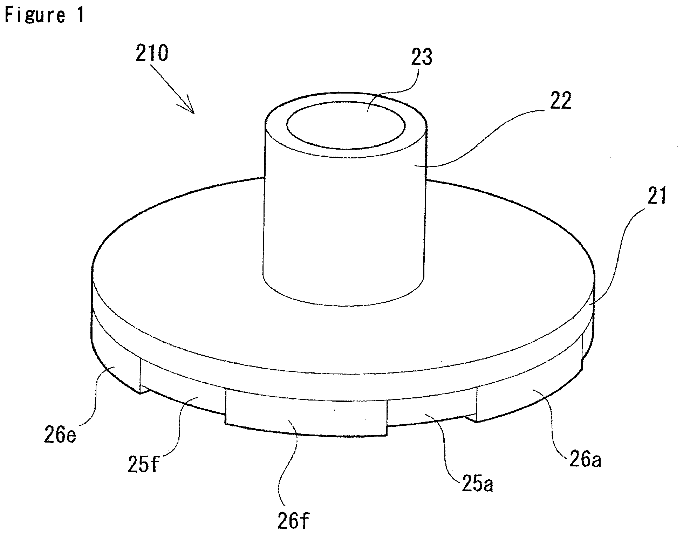

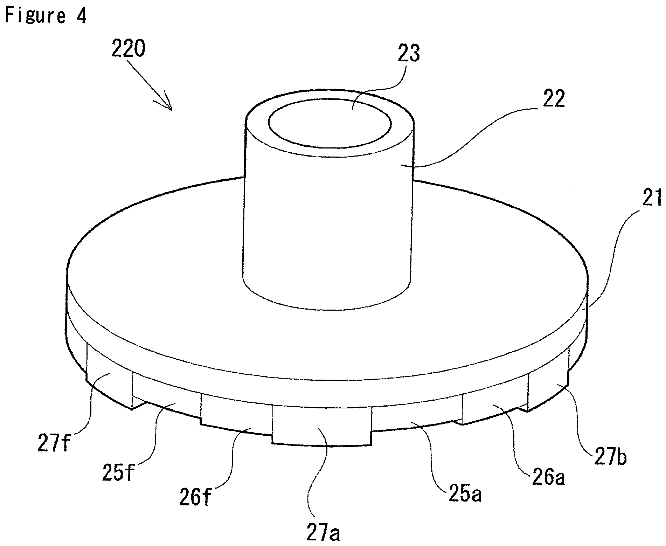

As the surface-reducing device, for example, a rotation surface-reducing head for electrolytic grinding reducing shown in Figure 1 or 4 is preferably used.

### 1.1. Elastic grindstone

The elastic grindstone is not particularly limited as long as it is a grindstone having certain elasticity. Preferred examples of the elastic grindstone include a grindstone in which abrasive grains are fixed with an elastic body such as a rubber.

Since the elastic grindstone can contact not only the convex portion, but also the concave portion on the surface of the slab, the concave portion can also be polished.

### (1) Elastic body

Examples of the main raw material of the elastic body included in the elastic grindstone include a rubber and a thermoplastic elastomer.

As the rubber, not only natural rubber, but also synthetic rubbers such as isoprene rubber, styrene-butadiene rubber, butadiene rubber, acrylonitrile-butadiene rubber, chloroprene rubber, ethylene-propylene rubber, chlorosulfonated polyethylene, chlorinated polyethylene, urethane rubber, silicon rubber, epichlorohydrin rubber and butyl rubber can be used.

Further, examples of the elastomer include a styrene block copolymer, a chlorinated polyethylene-based elastomer, a polyester-based elastomer, a nitrile-based elastomer, a fluorine-based elastomer, a silicon-based elastomer, an olefin-based elastomer, a vinyl chloride-based elastomer, a urethane-based elastomer and a polyamide-based elastomer.

Regarding the rubber and the thermoplastic elastomer, such materials can be used solely, or a plurality of types of materials may be blended.

In addition to the rubber and the elastomer, an additive may be contained in the elastic body. For example, when using the rubber as the raw material, examples of the additive to be mixed with the rubber include: a vulcanizing agent for crosslinking rubber molecules; a vulcanization accelerator for promoting a cross-linking reaction caused by the vulcanizing agent; a plasticizing agent for imparting plasticity to the rubber to aid mixing/dispersing of blended agents and to improve processability at the time of rolling, extrusion, etc.; a tackifier for imparting tackiness required at the time of the production of rubber to improve processability; and a filler, a stabilizer, a dispersant, etc. for increase in amount to reduce the production cost or for improving physical properties (mechanical characteristics such as tensile strength and elasticity, etc.) and processability of the rubber.

As the aforementioned additive, a filler may be used. For example, in order to add the weight to the elastic body, a filler made of a metal, ceramic, inorganic resin or the like, which has a hardness lower than that of the abrasive grain, can be used, and by blending such a filler, the elastic body can have a density suitable for processing.

Further, for preventing static electricity, a substance having conductivity such as carbon black and metal particles may be used.

### (2) Abrasive grain

The abrasive grain to be contained in the elastic grindstone is not particularly limited as long as it is made of a material which can be dispersed in or carried by the above-described base material and can treat the surface of a product to be processed to have desired roughness.

For example, an oxide of a metal such as iron, aluminium, silicon, titanium, vanadium, chromium, manganese, cobalt, nickel, copper, zinc, gallium, germanium, niobium, molybdenum, palladium, silver and tellurium, a ceramic such as glass, quartz, alundum, carbon alundum, carborundum, zirconia, garnet, titanium boride and carbon boride, a substance derived from a plant such as walnut, seed husk, pulp and cork, a resin of nylon, polycarbonate, polyethylene, polypropylene, polystyrene, vinyl chloride, polyacetal, cellulose acetate or the like, or an inorganic substance such as tungsten sulfide, molybdenum sulfide, magnesium hydroxide, carbon, graphite, barium chloride and aluminium chloride can be used as the abrasive grain.

The hardness of the abrasive grain to be used is preferably equal to or higher than the hardness of a product to be processed, but depending on the material and processing conditions of the product to be processed, the hardness of the abrasive grain is not necessarily required to be equal to or higher than the hardness of the product to be processed. The grain size of the abrasive grain may be suitably selected depending on the intended degree of concavity and convexity (surface roughness). Further, the grain size of the abrasive grain is not particularly limited, and may be in the range of, for example, #20 to 20000 (930 to 0.5 µm). For example, in order to obtain a rough surface, an abrasive grain having a large grain size (small number) may be suitably used, and in order to reduce the surface roughness, an abrasive grain having a small grain size (large number) may be suitably used. The shape of the abrasive grain may also be suitably changed depending on the material, processing conditions, etc. of the product to be processed, and not only a spherical shape, but also various shapes such as a polygonal shape, a columnar shape, a flake-like shape, a needle-like shape, and a mixture of these shapes, etc. may be widely used.

The blending ratio (content) of the abrasive grain in the elastic grindstone is not particularly limited, but is preferably in the range of from 25 to 50 wt% per 100 wt% of the elastic grindstone.

For example, when the content of the abrasive grain is 25 wt% or less per 100 wt% of the elastic grindstone, due to the influence of the base material of the elastic body, the modulus of repulsion elasticity of the elastic polishing material is increased, and as a result, the efficiency of grinding is decreased. Meanwhile, when the content of the abrasive grain is more than 50 wt%, the most part of the grindstone is composed of the abrasive grain and the hardness of the grindstone is relatively high. For this reason, there is a possibility that the inner side of a flaw existing on the surface of the product to be processed cannot be ground.

### 1.2. Flexible abrasive grain unit

The flexible abrasive grain unit can also follow not only the convex portion, but also the concave portion on the surface of the slab, and therefore the concave portion can be polished thereby.

The flexible abrasive grain unit can be formed, for example, by wrapping the surface of an elastic body with a polishing cloth or affixing the polishing cloth to the surface of the elastic body. Whether one of the elastic grindstone and the flexible abrasive grain unit is to be used or both of them are to be used may be suitably determined depending on polishing conditions.

The elastic body to be used in the flexible abrasive grain unit is the same as the elastic body to be used in the elastic grindstone.

### 1.3. Electrode

The electrode is not particularly limited as long as it is made of a material having conductivity, but preferably, copper, iron, stainless steel or the like is used for the electrode.

The electrode sparks when it comes into contact with the slab. Therefore, in order to prevent a spark, the elastic grindstone or the flexible abrasive grain unit is disposed so that it projects in a lower direction from the electrode.

### 2. Rotation surface-reducing head for electrolytic grinding reducing

The rotation surface-reducing head for electrolytic grinding reducing that can be used as the surface-reducing device of the present invention has one or more selected from the group consisting of the elastic grindstone and the flexible abrasive grain unit and the electrode, and may further have other constitutions such as a usual grindstone that does not have elasticity.

### 2.1. Rotation surface-reducing head for electrolytic grinding reducing in which electrode and elastic grindstone are disposed

A rotation surface-reducing head for electrolytic grinding reducing 210 in which an electrode and an elastic grindstone are disposed will be described below with reference to Figures 1-3.

As shown in Figures 1-3, the surface-reducing head 210 has: a head base 21; a rotary shaft 22; and electrodes 25a to 25f formed into a pad-like shape and grindstones 26a to 26f formed into a pad-like shape, which are provided to the head base 21. The rotary shaft 22 has a hollow tubular structure and has a liquid feeding channel 23 for passing an electrolyte. The head base 21 and the rotary shaft 22 are integrally formed.

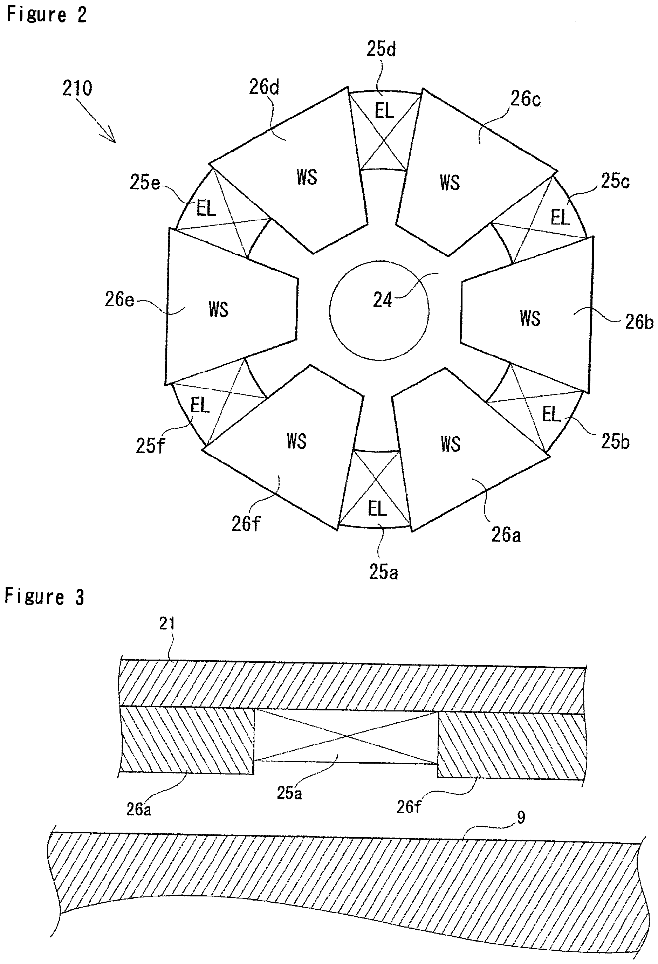

As shown in Figure 2, the electrode 25 and the grindstone 26 are alternately disposed along the outer periphery on the head base 21 whose bottom surface is circular, and a concave liquid reservoir 24 is provided at the center section of the head base 21. The liquid reservoir 24 is communicated with the liquid feeding channel 23 so that an electrolyte flowing from the liquid feeding channel 23 flows into the liquid reservoir 24.

In Figure 3, for the sake of description, an appearance of a slab 9 and a surface reducing head 2 facing each other is shown. Figure 3 shows an attached state of the electrode 25 and the elastic grindstone 26 to the head base 21 and a positional relationship thereof with the slab. As shown in Figure 3, the electrode 25 and the elastic grindstone 26 are disposed so that the bottom surface (surface facing the slab 9) of the elastic grindstone 26 is near to the slab 9 and the bottom surface of the electrode 25 does not contact the slab 9. It is to be noted that this disposal shows a state when polishing is not performed.

In this regard, it is preferable that the six electrodes 25a-25f are disposed so that each of them has the same height in order to keep the current density constant during an energization. Further, the elastic grindstones 26a-26f are disposed so that each of them has the same height in order to keep the accuracy of surface polishing constant.

Thus, by disposing the elastic grindstone 26 so that it projects in a lower direction from the electrode 25, a predetermined distance can be kept between the electrode 25 and the slab, so that a spark between the electrode and the slab, which may be generated during electrolytic grinding reducing, can be prevented and a channel for the electrolyte can be secured.

### 2.2. Surface-reducing head having electrode, elastic grindstone and flexible abrasive grain unit

Next, a surface-reducing head 220 in which an electrode, an elastic grindstone and a flexible abrasive grain unit are disposed will be described below with reference to Figures 4-6.

As shown in Figures 4-6, the surface-reducing head 220 has a head base 21 and a rotary shaft 22, as well as electrodes 25a-25f, elastic grindstones 26a-26f and flexible abrasive grain units 27a-27f disposed on the head base. The rotary shaft 22 has a hollow structure and has a liquid feeding channel 23 for passing an electrolyte.

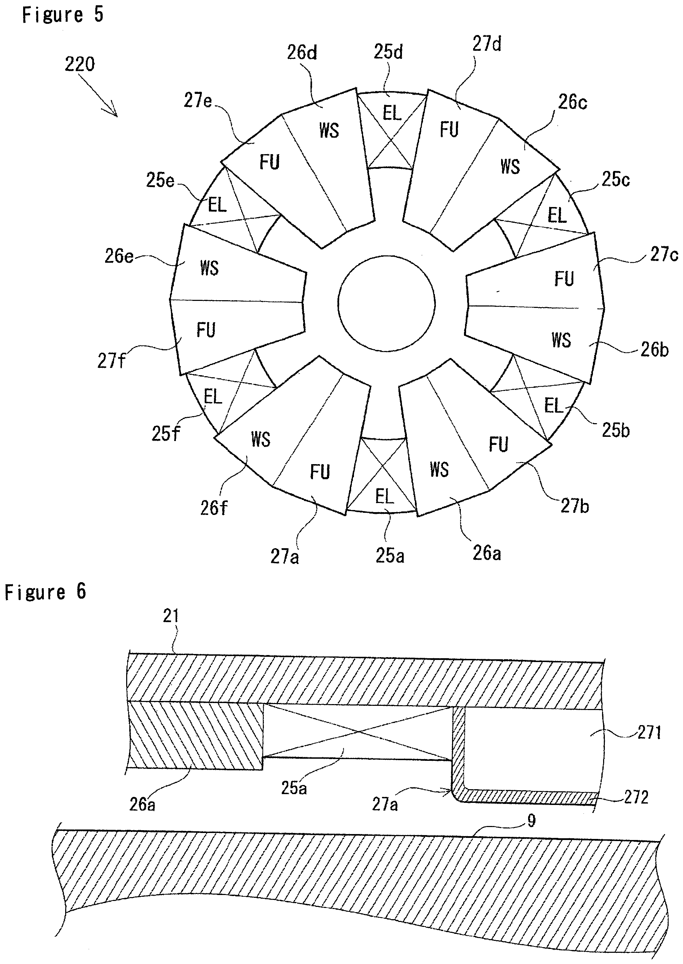

As shown in Figure 5, the electrode 25, the elastic grindstone 26, and the flexible abrasive grain unit 27 are sequentially disposed along the outer periphery on the head base 21 whose bottom surface is circular, and a concave liquid reservoir 24 is provided at the center section thereof. The liquid reservoir 24 is communicated with the tubular portion 23 so that an electrolyte flowing through the tubular portion 23 flows into the liquid reservoir 24. Note that in the explanation above, the electrode, the elastic grindstone and the flexible abrasive grain unit are disposed in this order around the rotary shaft, but the arrangement of the electrode, the elastic grindstone and the flexible abrasive grain unit may be suitably changed.

In Figure 6, for the sake of description, an appearance of a slab 9 and a surface-reducing head 220 facing each other is shown. Figure 6 shows an attached state of the electrode 25, the elastic grindstone 26 and the flexible abrasive grain unit 27 to the head base 21 and a positional relationship with the slab.

As shown in Figure 6, the electrode 25, the elastic grindstone 26 and the flexible abrasive grain unit 27 are disposed so that the bottom surface (surface facing the slab 9) of the flexible abrasive grain unit 27 is the nearest to the slab 9, the bottom surface of the elastic grindstone 26 is the second nearest to the slab 9, and the bottom surface of the electrode 25 is the farthest from the slab 9. In this way, the electrode 25, the elastic grindstone 26 and the flexible abrasive grain unit 27 are disposed so that the flexible abrasive grain unit 27, the elastic grindstone 26 and the electrode 25 project in this order in the lower direction (in the direction of the slab 9) from the bottom surface (surface facing the slab 9) of the head base 21.

The flexible abrasive grain unit can be formed, for example, by wrapping the surface of an elastic body with a polishing cloth or affixing the polishing cloth to the surface of the elastic body.

### 3. Surface-reducing device having surface-reducing head

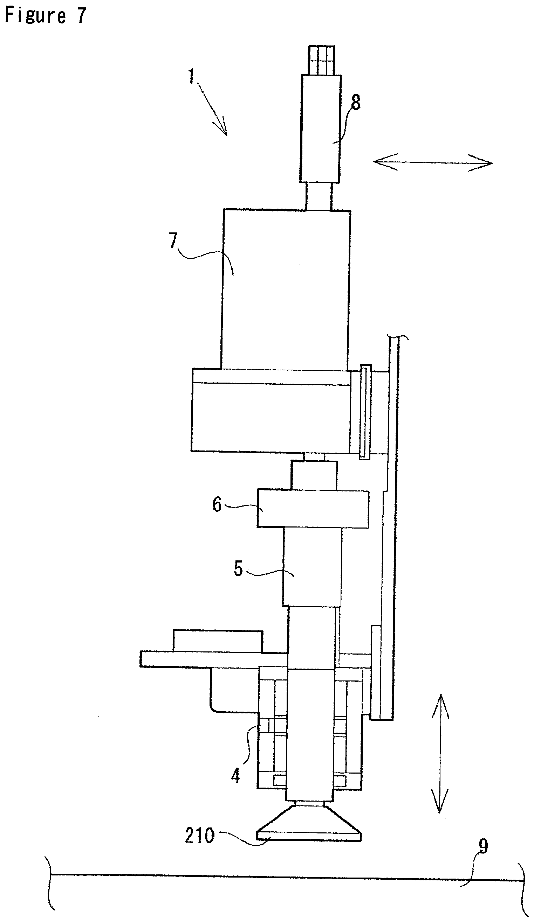

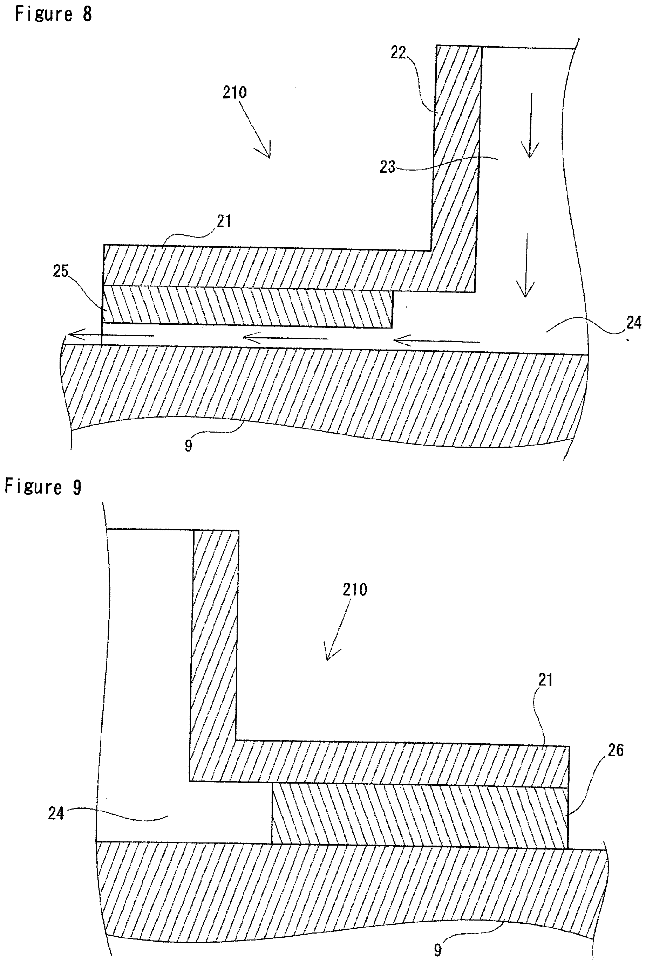

Next, an electrolytic grinding reducing device having a surface-reducing head 210 will be described based on Figures 7 and 8.

Figure 7 is a schematic view schematically showing the entire body of a surface-reducing device 1. As shown in Figure 7, the surface-reducing device 1 mainly has a surface-reducing head 210, an electrolyte supplying portion 4, an energizing portion 5, an insulation coupling 6, a head rotating motor 7, and an elevating device 8.

The electrolyte supplying portion 4 is a means for applying a predetermined pressure to the electrolyte to supply the surface-reducing head 210 with the electrolyte. Thus, the electrolyte is supplied to the liquid reservoir 24 through the rotary shaft 22 of the surface-reducing head 210 as shown in Figure 8. As the electrolyte, for example, an aqueous solution of sodium nitrate, an aqueous solution of sodium sulfate, etc. may be used.

Further, a potential difference between the electrode 25 of the surface-reducing head 210 and the slab 9 is generated by the energizing portion 5, so that a current having a predetermined current density flows in the electrolyte flowing therebetween. The insulation coupling 6 is a means for current leakage prevention. In addition, the head rotating motor 7 and the surface-reducing head 210 are connected directly or indirectly with each other so that the rotating force of the head rotating motor 7 is passed to the surface-reducing head 210.

The slab 9 is placed below the surface-reducing head 210 face-to-face therewith, and the surface-reducing head 210 rotating is pressed against the slab 9 at a predetermined pressure by the elevating device 8, so that the slab is subjected to electrolytic grinding reducing.

Next, the electrolytic grinding reducing treatment for the slab 9 using the electrolytic grinding reducing device 1 having the surface-reducing head 210 will be described based on Figures 8 and 9.

The surface-reducing head 210 rotating is lowered by the elevating device 8 to be brought into contact with the slab 9 at a predetermined pressure, so that the electrolytic grinding reducing treatment is carried out.

The electrolytic grinding reducing treatment is carried out by using the slab as a positive electrode and the electrode of the surface-reducing head as a negative electrode. At this time, a gas generated at the electrode (negative electrode) is discharged to the outside of the system by the centrifugal force caused by rotation of the surface-reducing head and a liquid flow from the liquid reservoir 24 to the outward direction, and thus the electrolytic grinding reducing treatment can be continuously carried out.

Figure 8 is a part of a sectional view in which a plane including the central axis (rotary shaft) and the electrode 25 of the surface-reducing head 210 is a cross-section and is an explanatory drawing showing the action of the electrode 25 at the time of polishing the slab 9 using the surface-reducing head 210.

Arrows shown in Figure 8 indicate how the electrolyte flows. More specifically, the tubular portion 23 and the liquid reservoir 24 are communicated with each other so that the electrolyte supplied from the electrolyte supplying portion 4 of the surface-reducing device 1 to which the surface-reducing head 210 is attached passes through the tubular portion 23 in the rotary shaft 22 and supplied to the concave liquid reservoir 24. The electrolyte supplied to the liquid reservoir 24 flows through the gap between the electrode 25 and the slab 9 at a predetermined flow rate by the pressure applied by the electrolyte supplying portion 4 and the centrifugal force. The above-mentioned flow rate is preferably from 5 to 10 m/sec., so that hydrogen and electrolytic effluent generated from the surfaces of the electrode 25 and the slab 9 are immediately removed.

Further, for example, by applying a negative pressure to the electrode 25 and a positive pressure to the slab 9, a current flows so that the current density in the electrolyte between the electrode 25 and the slab 9 becomes 5-40 A/cm². By this current, hydrogen is generated from the surface of the electrode 25 and electrolytic eluate is generated from the surface of the slab 9, and these hydrogen and electrolytic eluate are discharged together with the electrolyte.

The elastic grindstone 26 disposed on the head base 21 is disposed so as to be closer to the slab 9 than the electrode 25. Figure 9 is a part of a sectional view of the surface-reducing head 210 taken along the rotary shaft and provides explanation about the elastic grindstone 26 at the time of polishing the slab 9 using the surface-reducing head 210. Specifically, Figure 9 shows an appearance of the elastic grindstone 26 which is deformed by compression by the pressure from the elevating device 8 to be brought into contact with the slab 9.

The elastic grindstone 26 abrades the surface of the slab 9, and the slab 9 is energized via the electrolyte, thereby allowing the concave portion of the slab to be subjected to the electrolytic grinding reducing treatment. As a result, it is possible to carry out electrolytic grinding reducing of the concave portion on the surface of the slab 9.

### 4. Electrolytic grinding reducing treatment process

The electrolytic grinding reducing treatment process of the present invention can be carried out by applying a voltage to the electrode at the time of friction between the elastic grindstone or the flexible abrasive grain unit and the slab to energize the electrolyte present between the electrode and the slab. The current density during the electrolytic grinding reducing treatment process is preferably 3 to 50 A/cm². As the electrolyte to be used for the surface-reducing treatment of an iron-based slab such as stainless steel, for example, an aqueous solution of sodium chloride (NaCl), sodium nitrate (NaNO₃), sodium chlorate (NaClO₃) or the like may be suitably used. Further, when a larger amount of metal ion is to be eluted from the product to be processed, it is suitable to form a higher current density between the electrode and the product to be processed, and when the amount of metal ion elution is to be decreased, it is suitable to form a lower current density between the electrode and the product to be processed.

In the electrolytic grinding reducing treatment process of the present invention, it is preferred to adjust the flow rate of the electrolyte.

For example, when the current density is to be increased, since the amount of metal ion elution is expected to be increased, the flow rate of the electrolyte is preferably increased, and when the current density is to be decreased, since the amount of metal ion elution is expected to be decreased, the flow rate of the electrolyte is preferably decreased. Thus, by controlling the current density, the electrolysis amount on the surface of a piece of steel can be adjusted.

In this way, when a deep flaw is present on the surface of a piece of steel, it can be treated with an increased current density, and the inner side of a relatively deep flaw can also be subjected to electrolytic grinding reducing. Further, when there is almost no flaw on the surface of the slab and the amount of mold powder entrapped is small, it is treated with a decreased current density, thereby reducing the cost for the steel production.

### 5. Method for producing steel product

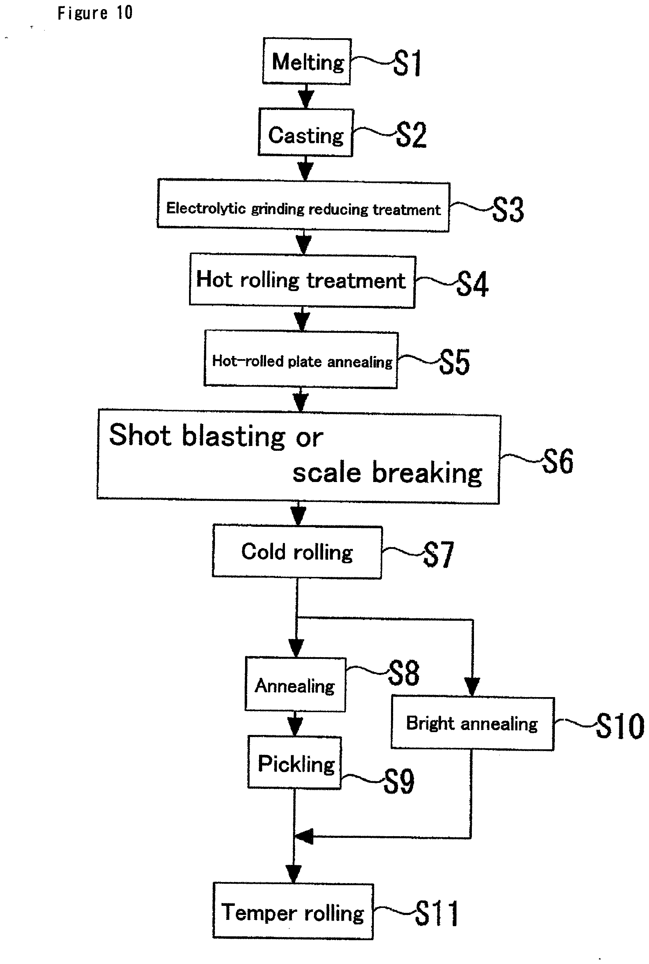

A preferred embodiment of the method for producing the steel product of the present invention will be described based on the flowchart of Figure 10.

Firstly, according to publicly-known methods, melting (S1) of a metal is performed and then casting (S2) is performed to produce a slab. The slab thus obtained is subjected to the electrolytic grinding reducing treatment of the present invention (S3). The slab after subjected to the electrolytic grinding reducing treatment is then subjected to a series of treatments, i.e., hot rolling treatment (S4), hot-rolled plate annealing (S5) and shot blasting or scale breaking (S6). After that, according to publicly-known methods, cold rolling (S7), and annealing (S8) and pickling (S9), or bright annealing (S10) are performed, and then temper rolling (S11) is performed, thereby producing the steel product.

In the production method of the present invention, the hot-rolled plate pickling treatment may be performed between shot blasting or scale breaking and the electrolytic grinding reducing treatment. Further, in the production method of the present invention, hot-rolled plate annealing may be skipped.

Moreover, not only slabs formed by the continuous casting method, but also slabs formed by subjecting a steel ingot to blooming may be subjected to the electrolytic grinding reducing treatment.

### EXAMPLES

### [Example 1]

The present inventors treated a stainless-steel slab before subjected to rolling using the surface-reducing device 1 described above.

Hereinafter, the present invention will be more specifically described by way of examples.

A sample having a thickness of 50 mm and a size of 500-mm square was obtained from SUS304 slab made by the publicly-known continuous casting process. The surface tested was one surface having a size of 500-mm square, and the surface was covered with black scale formed when molten steel was solidified. The height of the convex-concave pattern of the oscillation mark present on the surface was about 0.1 to 0.2 mm.

The surface to be tested of this sample was subjected to the electrolytic grinding reducing treatment using a surface-reducing head in the form disclosed in Figures 1-3. The conditions of the surface-reducing head were as described below.

### [Main data of surface-reducing head]

- Surface-reducing head diameter: 250 mm, 6 electrodes + 6 grindstones
- Electrodes made of copper
- Grindstones elastic grindstones

### [Conditions of electrolytic grinding reducing treatment]

- Rotation rate of surface-reducing head 350 rpm
- Pressing strength of head 0.1 MPa
- Electrolyte 30% aqueous solution of sodium nitrate
- Flow velocity of electrolyte 8 m/sec.
- Current density 15 A/cm²
- Number of head to be used 1
- Running velocity of head 0.6 m/m
- Number of passes 3 (Example 1a), 10 (Example 1b)

The experimental result obtained by 3 passes is called Example 1a and the experimental result obtained by 10 passes is called Example 1b.

### (Example 1a)

In Example 1a, the average amount of grinding of the surface of black scale using the electrolytic grinding reducing treatment was 90 µm.

Further, in Example 1a, Ra (average roughness of center line) of the slab surface after the treatment was 0.21 µm.

In Example 1a, concaves and indentations due to casting were present in the slab after the treatment, but the scale of the bottom portion of each of such defects was descaled by high-current pulse electrolysis, which is specific to the technique of the present invention, and had metallic luster. The bottom portion of a pit-like defect present on the slab surface was also descaled inevitably.

Using the slab treated in this way, a stainless-steel final product (steel product) can be produced according to the publicly-known methods of hot rolling and the following processes.

### (Example 1b)

In Example 1b, the average amount of grinding of the surface of black scale using the electrolytic grinding reducing treatment was 330 µm.

Further, in Example 1b, Ra (average roughness of center line) of the slab surface after the treatment was 0.20 µm.

In Example 1b, on the slab surface after the treatment, there was almost no surface defect like those observed on the slab surface of Example 1a.

### [Comparative Example 1]

The same sample as those used in Examples 1a and 1b was obtained from SUS304 slab. A grindstone having an abrasive grain size of 820 µm was attached to a rotary shaft of a grinding machine, and the surface layer of the slab was ground with several passes (900 µm).

The experimental results of Examples 1a and 1b and Comparative Example 1 are shown in Table 1 below.

**Table 1: Amount of polishing of slab and surface roughness**

| | Amount of surface grinding | Surface roughness (Ra) | Surface texture |
|---|---|---|---|
| Example 1a | 90 µm | 0.21 µm | Concaves and indentations exist, but the bottom portion of each of these surface detects was also descaled and has metallic luster. |
| Example 1b | 330 µm | 0.20 µm | There is almost no surface defect. |
| Comparative Example 1 | 900 µm | very rough | The bottom portion of each of some surface defects existing does not have metallic luster. |

As shown in Table 1, when Example 1 is compared to Comparative Example 1, it is understood that in Example 1, grinding provides a high yield and the surface after the treatment is smooth.

When both the slabs as described above were subjected to rolling under the same heating/hot-rolling conditions, it was understood that a hot-rolled plate (steel product) with a higher yield and a higher quality can be obtained in Example 1.

### [Example 2]

A sample having a size of 115 (t) x 200 (W) x 300 (L) (only one surface to be cast) was obtained from SUS304 slab.

The sample was subjected to electrolytic grinding reducing under the same conditions as Example 1 using the surface-reducing device 1 used in Example 1, and then subjected to hot rolling to form a hot-rolled plate having a thickness of 5 mm.

### [Comparative Example 2]

The same sample as Example 2 was obtained from SUS304 slab. The sample was subjected to the slab treatment under the same conditions as Comparative Example 1, and then subjected to hot rolling to form a hot-rolled plate having a thickness of 5 mm.

The experimental results of Example 2 and Comparative Example 2 are shown in Table 2 below.

**Table 2: Surface conditions after slab treatment**

| | Amount of surface grinding | Surface roughness (Ra) | Surface texture |
|---|---|---|---|
| Example 2 | 90 µm | 0.21 µm | Surface detects generated at the time of casting remain but there is no remaining scale at the bottom portion of each flaw. |
| Comparative Example 2 | 850 µm | very rough | There is seemingly no flaw on the surface generated at the time of casting. |

Both the hot-rolled plates were subjected to pickling according to the publicly known method and the surfaces thereof were observed. As a result, there was no significant difference between Example 2 and Comparative Example 2.

As shown in Table 2, Example 2, in which the electrolytic grinding reducing technique is applied to the slab treatment, realizes more simplified processes and a smaller amount of grinding compared to Comparative Example 2, and accordingly increases productivity and provides a higher yield. Thus, Example 2 is a very effective method.

### INDUSTRIAL APPLICABILITY

The method for producing a steel product of the present invention can be used, for example, for the production of a steel plate such as stainless steel.

### EXPLANATIONS OF LETTERS OR NUMERALS

- 1: surface-reducing device
- 9: product to be processed (slab)
- 25: electrode
- 26: elastic grindstone
- 27: flexible abrasive grain unit
- 21: head base
- 210: surface-reducing head
- 220: surface-reducing head
- 271: elastic body
- 272: polishing cloth

## Claims

1. A method for producing a steel product, said method comprising the following steps in consecutive order:
producing a slab (9), wherein a molten metal is cast to produce the slab (9) (S2),
electrolytic grinding reducing treatment, wherein the slab (9) is subjected to a surface-reducing treatment using a surface-reducing device (1) having an electrode (25), in which a voltage is applied to the electrode (25), and one or more selected from the group consisting of an elastic grindstone (26) and a flexible abrasive grain unit (27) (S3),
hot rolling treatment of the slab (9) (S4),
optionally plate annealing (S5), and
shot blasting or scale breaking (S6).

2. The method according to claim 1, wherein the surface-reducing device (1) is a rotation surface-reducing head (220) for electrolytic grinding reducing having a head base (21), a rotary shaft, and one or more selected from the group consisting of an electrode (25), an elastic grindstone (26) and a flexible abrasive grain unit (27) disposed on a bottom surface of the head base (21), and wherein the surface-reducing treatment is carried out with an electrolyte being flowed between the electrode (25) and the steel product.

3. The method according to claim 2, wherein in the rotation surface-reducing head (220) for electrolytic grinding reducing, the elastic grindstone (26) or the flexible abrasive grain unit (27) is disposed to project from the electrode (25).

4. The method according to any one of claims 1 to 3, wherein in the step of (a), the slab (9) is continuously taken out of a mold.

5. The method according to any one of claims 1 to 4, wherein the slab (9) is a slab (9) subjected to scale crushing.

6. The method according to claim 5, wherein the scale crushing is performed by shot blasting.

7. The method according to any one of claims 1 to 6, wherein the current density of a current flowed between the electrode (25) and the slab (9) is 5 to 40 A/cm².

8. The method according to any one of claims 1 to 7, wherein the flow rate of the electrolyte flowing between the electrode (25) and the slab (9) is 5 to 10 m/sec.

9. The method according to any one of claims 1 to 8, wherein the steel product is stainless steel.

## Patentansprüche

1. Verfahren zum Herstellen eines Stahlprodukts, wobei das Verfahren die folgenden Schritte in fortlaufender Reihenfolge aufweist:
Herstellen einer Bramme (9), wobei ein geschmolzenes Metall gegossen wird, um die Bramme (9) herzustellen (S2),
eine elektrolytische Schleifreduzierungsbehandlung, wobei die Bramme (9) einer Oberflächenreduzierungsbehandlung mittels einer Oberflächenreduzierungsvorrichtung (1) unterzogen wird, die eine Elektrode (25), wobei eine Spannung an die Elektrode (25) angelegt wird, und eines oder mehreres aufweist, das aus der Gruppe ausgewählt ist, die aus einem elastischen Schleifstein (26) und einer flexiblen Schleifkomeinheit (27) besteht (S3),
Warmwalzbehandlung der Bramme (9) (S4),
optionales Plattenglühen (S5), und
Sandstrahlen oder Zunderbrechen (S6).

2. Verfahren nach Anspruch 1, wobei die Oberflächenreduzierungsvorrichtung (1) ein Rotationsoberflächenreduzierungskopf (220) zur elektrolytischen Schleifreduzierung ist, der eine Kopfbasis (21), eine Drehwelle und eines oder mehreres aufweist, das aus der Gruppe ausgewählt ist, die aus einer Elektrode (25), einem elastischen Schleifstein (26) und einer flexiblen Schleifkomeinheit (27) besteht, die an einer Unterseite der Kopfbasis (21) angeordnet sind, und wobei die Oberflächenreduzierungsbehandlung mit einem Elektrolyt ausgeführt wird, der zwischen der Elektrode (25) und dem Stahlprodukt fließen gelassen wird.

3. Verfahren nach Anspruch 2, wobei im Rotationsoberflächenreduzierungskopf (220) zur elektrolytischen Schleifreduzierung, der elastische Schleifstein (26) oder die flexible Schleifkorneinheit (27) so angeordnet ist, dass sie von der Elektrode (25) vorsteht.

4. Verfahren nach einem der Ansprüche 1 bis 3, wobei im Schritt (a) die Bramme (9) kontinuierlich aus einer Form entnommen wird.

5. Verfahren nach einem der Ansprüche 1 bis 4, wobei die Bramme (9) eine Bramme (9) ist, die einer Zunderbrechung unterzogen wird.

6. Verfahren nach Anspruch 5, wobei die Zunderbrechung durch Sandstrahlen durchgeführt wird.

7. Verfahren nach einem der Ansprüche 1 bis 6, wobei die Stromdichte eines Stroms, der zwischen der Elektrode (25) und der Bramme (9) fließt, 5 bis 40 A/cm² beträgt.

8. Verfahren nach einem der Ansprüche 1 bis 7, wobei die Strömungsgeschwindigkeit des Elektrolyten, der zwischen der Elektrode (25) und der Bramme (9) fließt, 5 bis 10 m/s beträgt.

9. Verfahren nach einem der Ansprüche 1 bis 8, wobei das Stahlprodukt Edelstahl ist.

## Revendications

1. Procédé de fabrication d'un produit en acier, ledit procédé comprenant les étapes successives suivantes :
production d'une brame (9), un métal en fusion étant coulé pour produire la brame (9) (S2),
traitement de réduction par meulage électrolytique, la brame (9) étant soumise à un traitement de réduction de surface au moyen d'un dispositif de réduction de surface (1) pourvu d'une électrode (25), une tension étant appliquée sur l'électrode (25), et pourvu d'un ou de plusieurs éléments sélectionnés dans le groupe composé d'une meule élastique (26) et d'une unité flexible à grains abrasifs (27) (S3),
traitement par laminage à chaud de la brame (9) (S4),
facultativement, recuit de plaque (S5), et
grenaillage ou fragmentation des scories (S6).

2. Procédé selon la revendication 1, où le dispositif de réduction de surface (1) est une tête rotative de réduction de surface (220) pour une réduction par meulage électrolytique, avec une base de tête (21), une queue rotative, et un ou plusieurs éléments sélectionnés dans le groupe composé d'une électrode (25), d'une meule élastique (26) et d'une unité flexible à grains abrasifs (27) disposés sur une surface inférieure de la base de tête (21), et où le traitement de réduction de surface est exécuté avec un électrolyte injecté entre l'électrode (25) et le produit en acier.

3. Procédé selon la revendication 2, où, sur la tête rotative de réduction de surface (220) pour une réduction par meulage électrolytique, la meule élastique (26) ou l'unité flexible à grains abrasifs (27) est disposée en saillie de l'électrode (25).

4. Procédé selon l'une des revendications 1 à 3, où lors de l'étape (a), la brame (9) est retirée d'un moule de manière continue.

5. Procédé selon l'une des revendications 1 à 4, où la brame (9) est une brame (9) soumise à broyage des scories.

6. Procédé selon la revendication 5, où le broyage des scories est exécuté par grenaillage.

7. Procédé selon l'une des revendications 1 à 6, où la densité d'un courant injecté entre l'électrode (25) et la brame (9) est comprise entre 5 et 40 A/cm².

8. Procédé selon l'une des revendications 1 à 7, où le débit de l'électrolyte injecté entre l'électrode (25) et la brame (9) est compris entre 5 et 10 m/sec.

9. Procédé selon l'une des revendications 1 à 8, où le produit en acier est de l'acier inoxydable.
